# EUROPEAN PATENT SPECIFICATION

(11) **EP 1 303 155 B1**
(45) Date of publication and mention of the grant of the patent: **15.08.2007**
(21) Application number: 01124500.8
(22) Date of filing: 12.10.2001
(51) Int. Cl.: H04Q 7/38, G01S 5/14

(54) **System, method and device for determining the position of a portable device in a wireless communication system**
System, Verfahren und Vorrichtung zur Bestimmung der Position einer Mobilstation in einem Funkkommunikationssystem
Système, méthode et dispositif de détermination de la position d'une station mobile dans un système de communication sans fil

(43) Date of publication of application: 16.04.2003
(73) Proprietor: Ascom (Sweden) AB, 402 76 Göteborg (SE)
(72) Inventor: Sandberg, Henrik E., 43168 Mölndal (SE); Adrian, Arne, 42736 Billdal (SE)

(56) References cited:
- EP-A- 0 930 514
- US-A- 6 055 434

## Description

### Field of the Invention

The present invention relates to a system for wireless communication in accordance with the preamble of claim 1. Examples of such a system are described in EP-A-0 930 514 and US-A-6 055 434. The invention in particular relates to the field of wireless communication systems of the kind where a number of portables communicate through a number of base stations, such as in a DECT-system (Digital Enhanced Cordless Telecommunication) .

### Technical Background

Wireless communication systems with portable devices are many times used in an environment where the ability to transmit alarms is required. Examples of such environments are prisons, care units, etc. Other examples are guards or watchmen patrolling an area such as an industry, maids in a hotel, etc.

It is known to use an existing communication system, e.g. a DECT-system, to provide the function of alarm transmission.

In a situation where an alarm is sent, it is normally helpful to as soon as possible find out from where this alarm was sent, in order to provide the necessary assistance. However, when using the portables of a cordless system, there is no simple way of quickly enough locating the position of the user with satisfactory accuracy. Note that the time factor and accuracy in many situations may be critical.

Of course, this situation is only a special case of the general problem of locating a portable in a wireless communication system, such as a DECT-system.

It is known to use the positions of the base stations in a telecommunication system to make a rough estimate of where a portable is located. This method is used e.g. in GSM networks. However, in this case the precision of the position determination is dependant on the number of base stations, making it very costly if an exact position is required (a large number of base stations).

Other solutions include the use of infra red waves and low frequency radio waves (30-40 kHz). In short, such systems are based on the arranging of transmitters at various places in the area to be supervised. Each portable has a separate receiver for receiving this signal, thereby giving them information related to their position.

None of these systems are however satisfactory, especially not in combination with a wireless telephone system. IR-waves require an uninterrupted path, and each portable therefore must be carried outside clothes (not in a pocket). The LF-waves on the other hand are difficult to restrict (and therefore to define a relevant position).

An example of a related technology is given in the British patent 2 051 444.

### Summary of the Invention

An object of the present invention is to provide a cost efficient way of determining the position of a user in a wireless communication system, alleviating some of the problems mentioned above.

This and other objects are achieved with a beacon in accordance with claim 10. The beacon is arranged to communicate according to the communication standard used by the system and to transmit a message directly receivable by portables located sufficiently close to the beacon. The message comprises an identification of said beacon. The beacon can advantageously be provided in a system of the kind mentioned by way of introduction.

The invention further provides a method for determining the position of a portable within a wireless communication system.

A beacon is arranged to transmit a message including an identification code that is receivable by a portable. By arranging each beacon in a known, fixed position, a received identification code provides information relating to the position of the portable.

Preferably, the beacon has the same technical properties as the portables, with the exception of being physically fixed in one position. This means they do not need to be connected to the system in the way a base station is, and are each identified by the system as any other portable. The cost for each beacon is thus significantly reduced.

Further, each beacon can preferably be contacted via a base station, just like a portable. This allows the system to interact directly with the beacons, for example to supervise their function. This can be important in an environment where sabotage can be expected, such as in a prison.

The identification code can be stored in the portable. At a suitable time, for example when an alarm is sent from the portable, the identification code can be transferred to the system, thereby indicating the position of the portable. It should be noted that the expression "identification code" here is used relating to the identity of the beacon, and not the portable.

In a preferred embodiment, several consecutively received identification codes are stored by the portable. When the position of a portable is determined, the most recently stored identification code represents the portable's current location, and the preceding identification codes represent the path it has followed. This information can be used to establish in what direction the portable is being moved.

According to another embodiment, a received identification code is transmitted to a central unit as soon as a new, not earlier received, identification code is received. There, it can be used to continually monitor the position of a portable. By logging several transmitted identification codes, the central unit can provide information about the movements of portables in the system.

According to the invention, the identification code is only accepted (e.g. stored or transmitted) by the portable if the message is received with at least a predetermined signal strength. This ensures that the portable is at a predetermined maximum distance from the beacon, and thus makes the positioning more accurate.

The predetermined signal strength can vary between different beacons, and in that case be included as a threshold value in the positioning message from the beacon. Upon receiving a positioning message, a portable then extracts the threshold value, and determines if the signal has a signal strength exceeding this value. Only if this is the case, the received identification code is stored by the portable.

The possibility to set a specific required threshold value for each beacon enables the choice of active area for each device. One beacon can thus have a low required threshold value, covering a large area, such as a small building. Another beacon can have a significantly higher required threshold value, covering a smaller area, such as a particular doorway. In both cases, all portables in the covered area store the beacon's identity.

The communication system is preferably set up according to the DECT standard. In this case, the positioning message can be a proprietary code according to the standard, and the threshold value can be a radio signal strength indicator (RSSI).

### Brief Description of the Drawings

Fig 1 is a schematic view of a wireless communication system in a building.
Fig 2 is a more detailed view of a system according to an embodiment of the invention.
Fig 3 is a plane view of a section of a building, equipped with a system according to an embodiment of the invention.
Fig 4 is a block diagram of a method according to the invention.
Fig 5 is a block diagram of an alarm transmission.

### Detailed Description of a Preferred Embodiment

The following description of a preferred embodiment of the invention is related to a wireless telephone system according to the DECT standard. Naturally, the invention can equally well be implemented by the skilled artisan in a wide variety of similar communication systems, based on other standards, such as PWT or wireless LAN.

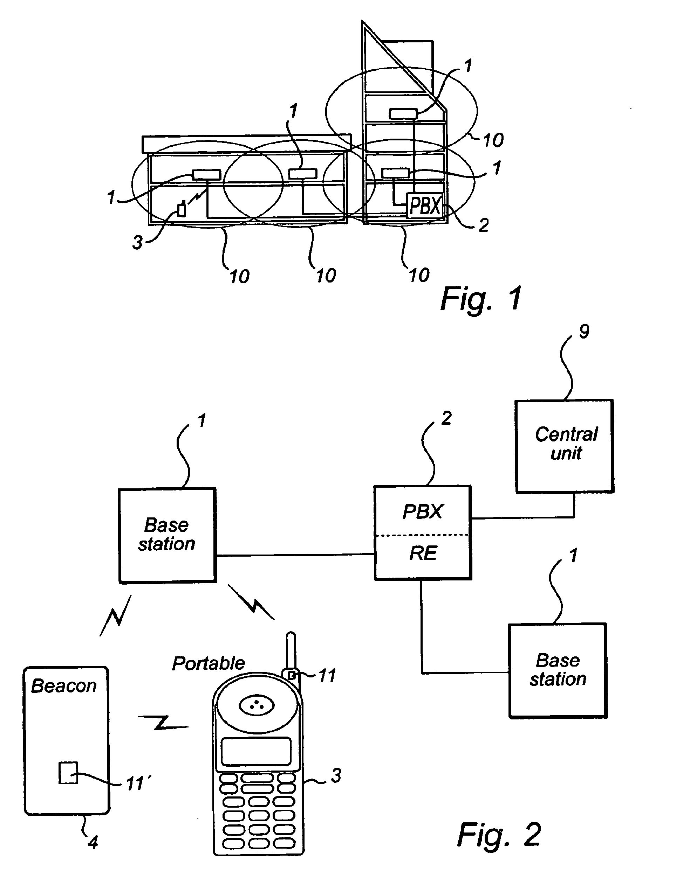

Fig 1 illustrates how a telephone system includes a number of base stations 1 in a building, each connected to a Private Branch Exchange/Radio Exchange (PBX/RE) 2 via a fixed communication link, normally a hard wired link. Each base station covers a small area 10, and these areas overlap to some extent, thereby giving adequate coverage in the entire building. A portable 3 in the building will communicate with the base station 1 that receives the best signal strength.

Examples of principles for such communication are well known, and reference is made to the standards TBR6 "Digital Enhanced Cordless Telecomunications (DECT); General terminal attachment requirements" and TBR22 "Radio Equipment and systems (RES); Attachment requirements for terminal equipment for Digital Enhanced Cordless Telecomunications (DECT) Generic Access Profile (GAP) applications".

Fig 2 shows in greater detail a system according to the invention, with a portable 3 and a beacon 4. The PBX/RE 2 is also connected to a central unit 9, which can provide various functionality in the system. For example, the central unit 9 can handle alarms transmitted from the portables, and ensure that suitable measures are taken. Naturally, the PBX/RE 2 and central unit 9 can be physically integrated, and it is also possible to implement other network designs securing the same functionality.

The portable 3 can be of essentially conventional type, and comprises a transceiver 11 for receiving and transmitting radio waves. In addition to conventional functionality, adapting the portable 3 to communicate with the base stations 1 in accordance with the DECT standard, the portable is adapted to receive messages directly from the beacon 4, and to handle them in a way more closely described below.

The beacon 4 is arranged in a fixed location but unlike a base station has no physical connection (wire) to the PBX/RE. Instead, it can be essentially equivalent to a conventional portable. Like the portable 3, the beacon 4 is adapted to communicate with the base stations 1 according to the DECT standard. Further, each beacon is provided with functionality for transmitting messages to nearby portables, in a way more closely described below.

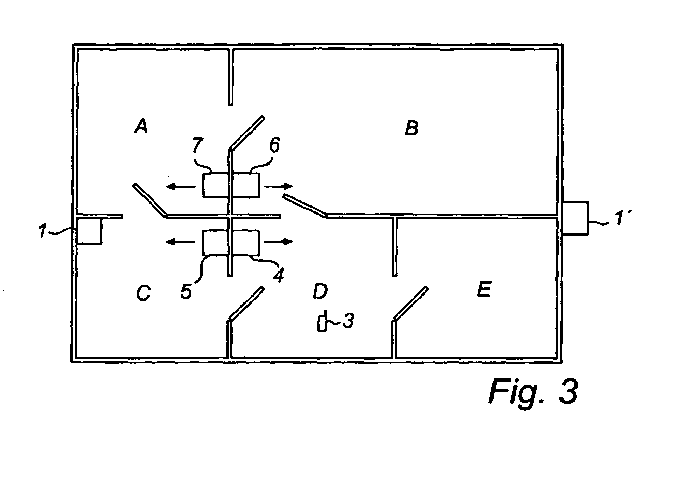

Fig 3 shows five rooms A-E in a section of a building where a wireless telephone system according to the invention is installed. This section of the building is essentially covered by one base station 1. For simplicity, it is here assumed that a portable 3 being carried within this section will communicate with the system via base station 1. Of course, if another base station 1' is arranged in another section of the building, and has better signal in one of the five rooms A-E, a portable in this room will in fact communicate via this base station 1' instead. Further, four beacons 4, 5, 6, 7 are shown in fig 3, arranged fixedly in rooms A, B, C and D respectively.

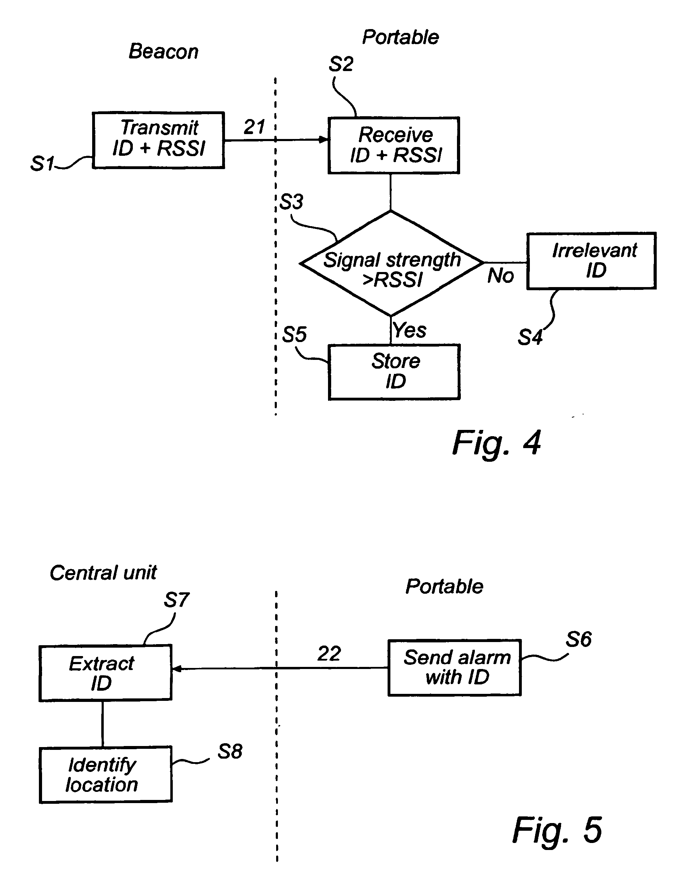

The functionality of the system will be further described in the following, with reference to fig 4 and 5.

The hardware and/or software in each beacon 4 is arranged to regularly transmit (S1) a message, such as a proprietary code 21 (according to the DECT standard), including an identification code (ID) identifying the device and a RSSI (Radio Signal Strength Indicator) threshold value. Preferably, the beacon adjusts to the existing radio traffic, and uses available slots in the communication frames. Thus, the beacon continually informs the surroundings of its existence and transmits its identity.

The software and/or hardware in the portable 3 listens to the proprietary code 21 transmitted from the beacons, and receives the identification code (ID) and RSSI threshold value (S2). First, the portable determines if the received signal strength exceeds the RSSI threshold included in the signal (S3). If this is not the case, the signal is deemed to have been received from too far away, thus making the received proprietary code 21 irrelevant (S4). If, however, the signal strength exceeds the threshold, the identification code (ID) is stored in the memory of the portable (S5), and represents the portable's 3 actual location. The portable can be adapted to store several consecutive identification codes, thereby keeping track of the position history of the portable 3, i.e. the movements of the user.

Reference is now made to fig 5. When an alarm 22 is sent from the portable 3, the most recently stored identification code is included in the alarm message (S6). The identification code is extracted (S7) by the central unit 9, and the location of the beacon associated with this particular identification code is identified (S8). This gives the system a fast and sufficiently correct information of the location of the portable 3.

It is also possible to include several identification codes in the alarm message, thereby giving the central unit 9 information about the movements of the user before the alarm was sent.

Alternatively, the identification code is sent to the central unit 9 in response to a request from the system, e.g. from the central unit 9, i.e. a polling type of operation. This gives an operator or administrator the possibility to determine the location of one or several portables 3 at any given time without requiring an active action from the portable or its user.

Of course, the storage of received identification codes need not be performed in the portable itself. Instead, the portable can be arranged to send each received to e.g. the central unit 9 via a base station 1, for storage in a memory area (not shown). This provides the ability to continually monitor the position of a portable at all times.

In an alternative embodiment, no RSSI threshold is included in the transmission from the beacons. Although this makes the positioning less accurate, the system will still provide a satisfactory result in many situations. Note that portables not provided with the additional hardware and/or software implementing the invention will work as a portable in a conventional system. They will not respond to transmissions from the beacons, but on the other hand will not be disturbed by these transmissions.

## Claims

1. A system for wireless communication, comprising:
a plurality of base stations (1),
a plurality of portable devices (3), arranged to communicate via the base stations (1) according to a communication standard,
a plurality of beacons (4),
wherein each beacon (4) is arranged to communicate according to said communication standard, and to transmit a message (21) directly receivable by portable devices (3) located sufficiently close to the beacon (4),
said portable devices (3) are adapted to receive said message (21),
said message comprising an identification code, identifying said beacon (4),
and wherein the portable devices (3) are adapted to store said identification code,
**characterized in that** said message (21) includes a threshold value, wherein the portable devices (3) are adapted to determine the signal strength of the message (21) and to store or transmit the received identification code only if the message (21) is received with a signal strength exceeding said threshold value.

2. A system according to claim 1, wherein said beacon is further arranged to communicate with the system via the base stations (1).

3. A system according to claim 1 or 2, wherein the portable devices (3) are adapted to transmit an alarm signal, said alarm signal including the stored identification code.

4. A system according to any of the preceding claims, wherein the system is a DECT (Digital Enhanced Cordless Telecommunication system.

5. A system according to claim 4, wherein said message is a proprietary code as defined within the DECT standard.

6. A system according to claim 1, wherein said threshold value is a RSSI (Radio Signal Strength Indicator).

7. A method for determining the position of a portable device (3) in a system for wireless communication where a plurality of portable devices are arranged to communicate with each other via a plurality of base stations (1) according to a communication standard, comprising:
arranging at least one beacon (4) in a fixed position,
transmitting (S1) a message (21) from said beacon (4) directly to said portable devices (3) according to said communication standard, said message including an identification code,
receiving (S2) said message in said portable device (3),
and storing (S5) said identification code in the portable device (3), which identification code is transmitted (S6) at a suitable time,
**characterized in that** said message (21) further includes a threshold value, usable by the portable device (3) to determine if the message (21) is received with sufficient signal strength.

8. A method according to claim 7, wherein the identification code is stored in a central unit (9).

9. A method according to claim 7 or 8, wherein several consecutively received and accepted identification codes are stored.

10. A beacon (4) in a system for wireless communication where a plurality of portable devices (3) are arranged to communicate via a plurality of base stations (1) according to a communication standard,
wherein said beacon (4) is arranged to communicate according to said communication standard, and to transmit a message (21) directly receivable by portable devices (3) located sufficiently close to the beacon (4), said message including an identification of said beacon (4),
**characterized in that** said message (21) further includes a threshold value, usable by the portable device (3) to determine if the message (21) is received with sufficient signal strength.

11. A beacon according to claim 10, further arranged to communicate with the system via the base stations (1).

## Patentansprüche

1. Ein System für die drahtlose Kommunikation, aufweisend:
eine Vielzahl von Basisstationen (1),
eine Vielzahl von Mobilendgeräten (3), vorgesehen zur Kommunikation via die Basisstationen (1) gemäss einem Kommunikationsstandard,
eine Vielzahl von Funkstellen (4),
wobei jede Funkstelle (4) ausgelegt ist, gemäss dem genannten Kommunikationsstandard zu kommunizieren und eine Meldung (21) zu senden, die durch Mobilendgeräte (3), welche genügend nahe bei der Funkstelle (4) lokalisiert sind, direkt empfangbar sind,
wobei die genannten Mobilendgeräte (3) ausgelegt sind, die genannte Meldung (21) empfangen zu können,
wobei die genannte Meldung einen die genannte Funkstelle (4) identifizierenden Identifikationscode enthält, und wobei die Mobilendgeräte (3) ausgelegt sind, den genannten Identifikationscode zu speichern,
**dadurch gekennzeichnet, dass**
die genannte Meldung (21) einen Schwellwert beinhaltet, wobei die Mobilendgeräte (3) ausgelegt sind, die Signalstärke der Meldung (21) zu bestimmen und den empfangenen Identifikationscode nur zu speichern oder zu senden, falls die Meldung (21) mit einer den genannten Schwellwert überschreitenden Signalstärke empfangen wurde.

2. Ein System gemäss Anspruch 1, in dem die genannte Funkstelle ferner ausgelegt ist, mit dem System via die Basisstationen (1) zu kommunizieren.

3. Ein System gemäss Anspruch 1 oder 2, in dem die Mobilendgeräte (3) ausgelegt sind, ein Alarmsignal zu senden, welches den gespeicherten Identifikationscode einschliesst.

4. Ein System gemäss einem der vorhergehenden Ansprüche, in dem das System ein DECT (Digital Enhanced Cordless Telecommunication) System ist.

5. Ein System gemäss Anspruch 4, in dem die genannte Meldung ein proprietärer Code ist, wie er im DECT Standard definiert ist.

6. Ein System gemäss Anspruch 1, in dem der Schwellwert ein RSSI (Radio Signal Strength Indicator/Funk-Signalstärke-Indikator) ist.

7. Ein Verfahren zur Bestimmung der Position eines Mobilendgeräts (3) in einem System für drahtlose Kommunikation, in dem eine Vielzahl von Mobilendgeräten ausgelegt sind, miteinander via eine Vielzahl von Basisstationen (1) gemäss einem Kommunikationsstandard zu kommunizieren, aufweisend:
wenigstens eine Funkstelle (4) wird in einer fixen Position arrangiert,
eine Meldung (21) wird gemäss dem genannten Kommunikationsstandard von der genannten Funkstelle (4) direkt zu den genannten Mobilendgeräten (3) gesendet (S1), die genannte Meldung umfasst einen Identifikationscode, die genannte Meldung wird in dem genannten Mobilendgerät (3) empfangen (S2), und der genannte Identifikationscode wird im Mobilendgerät (3) gespeichert (S5), welcher Identifikationscode zu einer geeigneten Zeit gesendet wird (S6),
**dadurch gekennzeichnet, dass**
die genannte Meldung (21) ferner einen Schwellwert enthält, der durch das Mobilendgerät (3) verwendbar ist, um zu bestimmen, ob die Meldung (21) mit einer genügenden Signalstärke empfangen wurde.

8. Ein Verfahren gemäss Anspruch 7, in dem der Identifikationscode in einer Zentraleinheit (9) gespeichert wird.

9. Ein Verfahren gemäss Anspruch 7 oder 8, in dem mehrere hintereinander empfangene und akzeptierte Identifikationscodes gespeichert werden.

10. Eine Funkstelle (4) in einem System für drahtlose Kommunikation,
in dem eine Vielzahl von Mobilendgeräten (3) ausgelegt ist, gemäss einem Kommunikationsstandard via eine Vielzahl von Basisstationen (1) zu kommunizieren, in dem die genannte Funkstelle (4) ausgelegt ist, gemäss dem genannten Kommunikationsstandard zu kommunizieren, und eine Meldung (21) zu senden, die durch genügend nahe bei der Funkstelle (4) lokalisierte Mobilendgeräte (3) direkt empfangen werden können, wobei die genannte Meldung eine Identifikation der genannten Funkstelle (4) umfasst,
**dadurch gekennzeichnet, dass**
die genannte Meldung (21) ferner einen Schwellwert umfasst, der durch das Mobilendgerät (3) verwendbar ist, um zu bestimmen, ob die Meldung (21) mit genügender Signalstärke empfangen wurde.

11. Eine Funkstelle gemäss Anspruch 10, weiterhin ausgelegt, um mit dem System via die Basisstationen (1) zu kommunizieren.

## Revendications

1. Système pour des communications sans fil, comprenant :
une pluralité de stations de base (1),
une pluralité de dispositifs portables (3), agencés pour communiquer via des stations de base (1) selon une norme de communication,
une pluralité de balises (4),
dans lequel chaque balise (4) est agencée pour communiquer selon ladite norme de communication et émettre un message (21) directement recevable par des dispositifs portables (3) placés suffisamment près de la balise (4),
lesdits dispositifs portables (3) sont adaptés pour recevoir ledit message (21),
ledit message comprenant un code d'identification, identifiant ladite balise (4),
et dans lequel les dispositifs portables (3) sont adaptés pour enregistrer ledit code d'identification,
**caractérisé en ce que** ledit message (21) comprend une valeur seuil, dans lequel les dispositifs portables (3) sont adaptés pour déterminer l'intensité du signal du message (21) et pour enregistrer ou transmettre le code d'identification reçu uniquement si le message (21) est reçu avec une intensité de signal excédant ladite valeur seuil.

2. Système selon la revendication 1, dans lequel ladite balise est en outre agencée pour communiquer avec le système via les stations de base (1).

3. Système selon la revendication 1 ou 2, dans lequel les dispositifs portables (3) sont adaptés pour émettre un signal d'alarme, ledit signal d'alarme comprenant le code d'identification enregistré.

4. Système selon l'une quelconque des revendications précédentes, dans lequel le système est un système DECT (Digital Enhanced Cordless Télécommunications, téléphonie numérique sans fil améliorée).

5. Système selon la revendication 4, dans lequel ledit message est un code exclusif conforme à la norme DECT.

6. Système selon la revendication 1, dans lequel ladite valeur seuil est un RSSI (Radio Signal Strength Indicator, indicateur d'intensité de signal radio).

7. Procédé pour déterminer la position d'un dispositif mobile (3) dans un système pour des communications sans fil dans lequel une pluralité de dispositifs portables sont agencés pour communiquer les uns avec les autres via une pluralité de stations de base (1) selon une norme de communication, comprenant :
l'agencement d'au moins une balise (4) dans une position fixe,
l'émission (S1) d'un message (21) de ladite balise (4) directement auxdits dispositifs portables (3) selon ladite norme de communication, ledit message comprenant un code d'identification,
la réception (S2) dudit message dans ledit dispositif mobile (3),
et l'enregistrement (S5) dudit code d'identification dans le dispositif mobile (3), lequel code d'identification est transmis (S6) à un instant approprié,
**caractérisé en ce que** ledit message (21) comprend en outre une valeur seuil, utilisable par le dispositif portable (3) pour déterminer si le message (21) est reçu avec une intensité de signal suffisante.

8. Procédé selon la revendication 7, dans lequel le code d'identification est enregistré dans une unité centrale (9).

9. Procédé selon la revendication 7 ou 8, dans lequel plusieurs codes d'identification reçus et acceptés de manière consécutive sont enregistrés.

10. Balise (4) dans un système pour des communications sans fil dans lequel une pluralité de dispositifs portables (3) sont agencés pour communiquer via une pluralité de stations de base (1) selon une norme de communication,
dans lequel ladite balise (4) est disposée pour communiquer selon ladite norme de communication, et pour transmettre un message (21) directement recevable par des dispositifs portables (3), situés suffisamment près de la balise (4), ledit message comprenant une identification de ladite balise (4).
**caractérisé en ce que** ledit message (21) comprend en outre une valeur seuil, utilisable par un dispositif mobile (3) pour déterminer si le message (21) est reçu avec une intensité de signal suffisante.

11. Balise selon la revendication 10, disposée en outre pour communiquer avec le système via les stations de base (1).
